(19) **Europäisches Patentamt / European Patent Office / Office européen des brevets**

(11) **EP 1 476 733 B1**

(12) **EUROPÄISCHE PATENTSCHRIFT**

(45) Veröffentlichungstag und Bekanntmachung des Hinweises auf die Patenterteilung:
**02.09.2009 Patentblatt 2009/36**

(21) Anmeldenummer: **03742568.3**

(22) Anmeldetag: **21.02.2003**

(51) Int Cl.:
***G01H 1/00*** *(2006.01)*

(86) Internationale Anmeldenummer:
**PCT/EP2003/001786**

(87) Internationale Veröffentlichungsnummer:
**WO 2003/071243 (28.08.2003 Gazette 2003/35)**

(54) **VERFAHREN UND EINRICHTUNG ZUR DETEKTION EINER IMPULSARTIGEN MECHANISCHEN EINWIRKUNG AUF EIN ANLAGENTEIL**

METHOD AND DEVICE FOR DETECTION OF A PULSED MECHANICAL EFFECT ON A PLANT COMPONENT

PROCEDE ET DISPOSITIF POUR LA DETECTION D'UNE ACTION MECANIQUE IMPULSIONNELLE SUR UNE PARTIE D'INSTALLATION

(84) Benannte Vertragsstaaten:
**AT BE BG CH CY CZ DE DK EE ES FI FR GB GR HU IE IT LI LU MC NL PT SE SI SK TR**

(30) Priorität: **22.02.2002 DE 10207455**

(43) Veröffentlichungstag der Anmeldung:
**17.11.2004 Patentblatt 2004/47**

(73) Patentinhaber: **AREVA NP GmbH**
**91052 Erlangen (DE)**

(72) Erfinder:
• **BECHTOLD, Bela**
**91096 Möhrendorf (DE)**

• **JAX, Peter**
**91056 Erlangen (DE)**
• **WIEMERSLAGE, Dieter**
**91093 Untermembach (DE)**

(74) Vertreter: **Mörtel & Höfner**
**Patentanwälte**
**Äussere Sulzbacher Strasse 159/161**
**90491 Nürnberg (DE)**

(56) Entgegenhaltungen:
**WO-A-00/55585**          **WO-A-01/75272**
**US-A- 4 425 798**        **US-A- 5 407 265**
**US-A- 5 943 634**

**Beschreibung**

Die Erfindung bezieht sich auf ein Verfahren und auf eine Einrichtung zur Detektion einer impulsartigen mechanischen Einwirkung auf ein Anlagenteil.

In einer Vielzahl von Anwendungsfällen ist es erforderlich, den ordnungsgemäßen Betrieb eines Anlagenteils, beispielsweise einer Rohrleitung der chemischen Verfahrenstechnik oder einer Strömungsmaschine, fortwährend zu überwachen, um Störungen rechtzeitig zu erkennen und schwerwiegende Folgeschäden zu vermeiden. Für eine derartige Überwachung sind im Stand der Technik eine Vielzahl von Verfahren bekannt.

In der EP 0 765 466 B1 ist beispielsweise vorgeschlagen worden, die Überwachung der Schwingungen von Turbinenschaufeln mit Hilfe von Mikrowellen vorzunehmen, die auf die Turbinenschaufeln gerichtet sind. Aus der Modulation der an den Turbinenschaufeln reflektierten Mikrowellen kann auf den Schwingungszustand der Turbine geschlossen werden.

Bei dem aus der DE 198 57 552 A1 bekannten Verfahren wird der Bruch der Welle einer Turbine durch eine Messung der Drehfrequenzen an den Enden der Welle erfasst.

In der DE 198 43 615 C2 wird vorgeschlagen, die Diagnose des Zustandes eines Verbrennungsantriebes mit Hilfe einer Analyse des Frequenzspektrums der Messsignale vorzunehmen, die mit Hilfe eines im Lufteinlass- oder Abgasbereiches angeordneten Schallaufnehmers aufgenommen werden.

In der DE 197 27 114 C2 werden zur Überwachung einer Maschine anstelle des Luftschalls die ihr auftretenden Körperschallsignale erfasst. Auch bei diesem bekannten Verfahren werden die jeweils ermittelten Frequenzspektren der vom Körperschallaufnehmer erfassten Messsignale analysiert.

Auch bei dem in der DE 195 45 008 C2 offenbarten Verfahren wird während des Betriebs der Maschine das Frequenzspektrum des von einem Überwachungssensor, beispielsweise einem Beschleunigungsaufnehmer erfassten Messsignals analysiert und mit einem Referenzfrequenzspektrum verglichen.

Um das Eindringen von Fremdteilen in eine Gasturbine feststellen zu können, ist in der US 4,888,948 am Einlass der Turbine ein Sensor angeordnet, mit dem eine von den Fremdkörpern induzierte elektrische Ladung erfasst wird.

Ein besonderes Problem stellen von der Strömung mitgeführte und auf das Anlagenteil auftreffende lose Teile dar, die nur eine impulsartige, kurzzeitige Einwirkung verursachen, deren sicherer Nachweis entsprechend problematisch ist.

Derartige Probleme können beispielsweise bei Gasturbinen auftreten, deren Brennkammer zum Schutz vor Überhitzung mit Keramikkacheln ausgekleidet sind. Diese Keramikkacheln werden durch in der Brennkammer auftretende Druckwechselschwankungen dynamisch hoch beansprucht. Dabei kann es passieren, dass Teilstücke der Kacheln an den jeweiligen Halterungen ausbrechen, von der Strömung des Abgases mitgerissen werden und auf die erste Leitschaufelreihe der Gasturbine aufschlagen. Dies kann zu einer Beschädigung der Beschichtung der Leitschaufeln und zu einer Zerstörung der dahinter angeordneten Laufschaufeln führen. Außerdem besteht die Gefahr, dass sich eine durch das Ausbrechen von Teilstücken bereits beschädigte Kachel vollständig aus den Halterungen löst und zu einem entsprechend massiven Schaden an der Gasturbine führen kann. In diesem Fall indiziert das Auftreffen kleiner loser Teile oder einer einzelnen Kachel einen bevorstehenden Totalabriss einer Kachel bzw. mehrerer Kacheln, so dass rechtzeitiges Abschalten der Gasturbine und rechtzeitiger Austausch der beschädigten Kacheln einen größeren Schaden verhindert.

Zur Überwachung derartiger Aufschläge auf ein Anlagenteil ist es aus der WO 01/75272 A2 grundsätzlich bekannt, mit Hilfe geeigneter Sensoren den Aufschlag durch einen dabei entstehenden Körperschall zu erfassen. Hierbei tritt aber insbesondere bei Gasturbinen das Problem auf, dass die normalen Betriebsgeräusche so hoch sind, dass auch der durch den Aufschlag einer gesamten Kachel auf die Leitschaufel der Gasturbine am Sensor erzeugte Signalanteil kleiner ist als der durch die normalen Betriebsgeräusche erzeugte Untergrund, so dass insbesondere das Auftreffen kleinerer Teilstücke durch eine alleinige Überwachung der Amplituden der Körperschallsignale nicht detektiert werden kann. Zur Verbesserung des Signal- Rauschverhältnisses wird deshalb in dieser Druckschrift vorgeschlagen, das von einem Messwertaufnehmer aufgenommene Messsignal einer Band- oder Hochpassfilterung zu unterziehen, um auf diese Weise die beim normalen Betrieb der Turbine entstehenden Körperschallsignale zu eliminieren.

Aus der WO 00/55585 A2 ist ein Verfahren und eine Einrichtung zum Überwachen einer Rotationsmaschine bekannt, bei denen mit Hilfe eines Beschleunigungsaufnehmers ein Körperschallsignal erfasst und hinsichtlich seiner spektralen Zusammensetzung analysiert wird, um unbekannte oder unerkannte Schwingungsfrequenzen zu entdecken. Hierzu werden aus dem Frequenzspektrum der Betrag des Frequenzspektrums bei der Frequenz f = 0, der Maximalwert des Betrages des Frequenzspektrums in einer vorgegebenen Anzahl von Frequenzbändern und eine als mittlere Spektralenergie bezeichnete Größe für jedes dieser Frequenzbänder ermittelt. Jede dieser ermittelten Messgrößen wird mit einer oder mehreren Schwellen verglichen. Diese Schwellen sind entweder fest vorgegeben oder werden alternativ hierzu in einem einmaligen Lernprozess ermittelt. In diesem Lernprozess wird ein Mittelwert dieser Messgrößen sowie die zu dieser Messgröße jeweils gehörende Standardabweichung bestimmt. Mit Hilfe dieses Mittelwertes und der dazugehörigen Standardabweichung werden nun Schwellwerte gebildet, die im einfachsten Fall jeweils der Summe aus Mittelwert und Standardabweichung entsprechen. Bei der bekannten Vorgehensweise wird somit jedes Frequenzband gesondert analysiert und überprüft, ob die in diesem Frequenzband ermittelte Messgröße einen oder mehrere vorgegebene Schwellwerte überschreitet.

Der Erfindung liegt nun die Aufgabe zu Grunde, ein Verfahren zur Detektion einer impulsartigen mechanischen Einwirkung auf ein Anlagenteil anzugeben, das gegenüber den im Stand der Technik bekannten Verfahren verbessert ist. Außerdem liegt der Erfindung die Aufgabe zu Grunde, eine Einrichtung zur Durchführung des Verfahrens anzugeben.

Die erstgenannte Aufgabe wird gemäß der Erfindung gelöst mit einem Verfahren mit den Merkmalen des Patentanspruches 1. Bei dem Verfahren zur Detektion einer impulsartigen mechanischen Einwirkung auf ein Anlagenteil wird ein im Anlagenteil vorhandenes Betriebsgeräusch kontinuierlich mit einem am Anlagenteil angeordneten Sensor erfasst und von diesem in ein Messsignal umgewandelt. Gemäß der Erfindung sind folgende Verfahrensschritte vorgesehen:

a) In zeitlich aufeinanderfolgenden, vorzugsweise einander überlappenden Zeitabschnitten wird bei vorgegebenen Frequenzen der Betrag des Frequenzspektrums des Messsignals ermittelt,
b) für jeden Zeitabschnitt und jede der vorgegebenen Frequenzen wird die Abweichung des Betrages von einem Betragsmittelwert bestimmt,
c) aus den für jede der vorgegebenen Frequenzen bestimmten Abweichungen wird für jeden Zeitabschnitt eine einzige, für alle Frequenzen gemeinsame Bewertungsfunktion abgeleitet,
d) die Bewertungsfunktion wird mit einem Schwellwert verglichen und das Überschreiten des Schwellwerts als Indiz für das Vorliegen eines die mechanische Einwirkung anzeigenden impulsartigen Signalanteiles herangezogen.

Die Erfindung beruht dabei auf der Überlegung, dass das Auftreten eines transienten Ereignisses (der durch einen Aufprall erzeugte impulsartige Körperschall) im Frequenzspektrum des unmittelbar vom Sensor aufgenommenen Messsignal leichter erkennbar ist als im eigentlichen Messsignal. Da außerdem das aktuelle Frequenzspektrum mit einem gemittelten Frequenzspektrum bei einer Vielzahl von Frequenzen verglichen wird, sind statistische Ausreißer weitgehend unterdrückt und die Empfindlichkeit des Verfahrens ist entsprechend erhöht.

Auf diese Weise ist die sichere Detektion auch kleinerer Bruchstücke ermöglicht, so dass beispielsweise im Fall der Überwachung einer Gasturbine ein größerer Schaden dadurch verhindert werden kann, dass der Beginn einer vollständigen Kachelablösung, der sich durch das anfängliche Ausbrechen kleinerer Bruchstücke ankündigt, erkannt wird und beschädigte Kacheln ausgetauscht werden können, noch bevor sie vollständig ausbrechen und zu einem folgeschweren Schaden an der Gasturbine führen.

In einer weiteren vorteilhaften Ausgestaltung der Erfindung wird der Betragsmittelwert für jede der vorgegebenen Frequenzen aus den in verschiedenen Zeitabschnitten ermittelten Beträgen durch eine zeitlich gleitende Mittelwertbildung ermittelt. Dadurch erfolgt eine Anpassung des zum Vergleich herangezogenen gemittelten Frequenzspektrums an sich zeitlich langsam verändernde Betriebssituationen, beispielsweise im Falle des Auftretens eines Brummens der Gasturbine.

In einer weiteren bevorzugten Ausgestaltung der Erfindung wird für jede der vorgegebenen Frequenzen für eine Mehrzahl von aufeinanderfolgenden Zeitabschnitten die Standardabweichung der Beträge vom Betragsmittelwert ermittelt und mit dieser die normierte Abweichung des Betrages vom Betragsmittelwert bestimmt. Aus dieser Abweichung wird anschließend für jeden Zeitabschnitt ein aktueller Parameterwert durch Bildung der Summe der Quadratwerte jeder normierten Abweichung über jede der vorgegebenen Frequenzen gebildet, der als Bewertungsfunktion dient.

Insbesondere wird über mehrere Zeitabschnitte ein gleitender mittlerer Parameterwert abgeleitet-und die Bewertungsfunktion aus der Differenz zwischen dem mittleren Parameterwert und dem aktuellen Parameterwert bestimmt. Dadurch ist die Empfindlichkeit des Verfahrens, d. h. der Abstand zwischen Nutzsignal und Untergrund nochmals deutlich erhöht.

Die zweitgenannte Aufgabe wird gemäß der Erfindung mit einer Einrichtung mit den Merkmalen des Patentanspruches 6 gelöst, deren Vorteile sowie die Vorteile der in den zugehörigen Unteransprüchen angegebenen Ausgestaltungen sich sinngemäß aus den Vorteilen der jeweils zugehörigen Verfahrensansprüche ergeben.

Zur weiteren Erläuterung der Erfindung wird auf die Zeichnung verwiesen. Es zeigen:

Fig. 1    ein Ausführungsbeispiel für eine Einrichtung gemäß der Erfindung in einer schematischen Prinzipskizze,

Fig. 2    ein Diagramm, in dem das vom Sensor erfasste Betriebsgeräusch in Abwesenheit einer Fremdeinwirkung gegen die Zeit aufgetragen ist,

Fig. 3    ein Diagramm, in dem das durch eine impulsartige mechanische Einwirkung bei ruhender Turbine vom Sensor erfasste Messsignal ebenfalls gegen die Zeit aufgetragen ist,

Fig. 4 ein Diagramm, in dem die Überlagerung des Messsignals gemäß Fig. 3 und des normalen Betriebsgeräusches gemäß Fig. 2 gegen die Zeit aufgetragen ist,

Fig. 5 das Spektrum des normalen Betriebsgeräusches einer Gasturbine,

Fig. 6 die zeitliche Variation des Spektrums in einem Wasserfalldiagramm,

Fig. 7 ein vereinfachtes Diagramm, in dem das Messsignal in zeitlich hoher Auflösung gegen die Zeit aufgetragen ist,

Fig. 8 ein Diagramm, in dem der aus dem Messsignal durch schnelle Fouriertransformation ermittelte Betrag des Frequenzspektrums bei einer vorgegebenen Frequenz gegen die Zeit aufgetragen ist,

Fig. 9 ein Diagramm, in dem der gleitende zeitliche Mittelwert der Beträge des Spektrums bei einer vorgegebenen Frequenz ebenfalls gegen die Zeit aufgetragen ist,

Fig. 10 den zeitlichen Verlauf einer aus der Signalanalyse gemäß der Erfindung abgeleiteten Bewertungsfunktion.

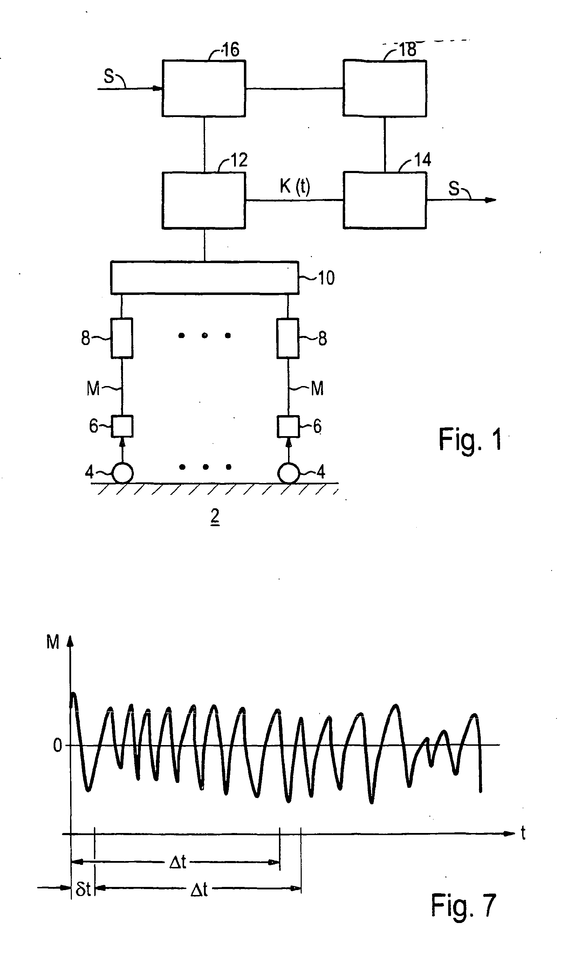

Gemäß Fig. 1 sind an einem Anlagenteil 2, beispielsweise eine Gasturbine, eine Mehrzahl von Sensoren 4, insbesondere piezoelektrische Beschleunigungsaufnehmer, angeordnet, die das im Anlagenteil 2 vorhandene und sich in Form von Körperschall ausbreitende Betriebsgeräusch kontinuierlich erfassen. Die Sensoren 4 wandeln die Körperschallsignale in ein elektrisches Messsignal um, das in einem Vorverstärker 6 verstärkt und an einen Multiplexer Analog-Digital-Wandler 8 weitergeleitet wird, der an einen digitalen Speicher 10 angeschlossen ist. Das jeweils anstehende verstärkte Messsignal M wird so digitalisiert, zwischengespeichert und zur weiteren Bearbeitung an eine Recheneinrichtung 12 weiterleitet, in der der erfindungsgemäße Auswertealgorithmus implementiert ist.

Die Recheneinrichtung 12 enthält für jeden Kanal einen Prozessor für eine schnelle Fouriertransformation FFT der vom Analog/Digital-Wandler 8 weitergegebenen Daten sowie einen Ringspeicher zum Speichern einer Anzahl N der durch die Fouriertransformation ermittelten Spektren. Aus den in der Recheneinrichtung 12 ermittelten sogenannten diskreten Fouriertransformierten wird für jeden Kanal nach einem in der Recheneinrichtung 12 implementierten und nachfolgend näher erläuterten Algorithmus eine von der Zeit t abhängige Bewertungsfunktion K(t) ermittelt, die in einer Vergleichseinrichtung 14 mit einem vorgegebenen Schwellwert $K_0$ verglichen wird. Ein Überschreiten des Schwellwertes $K_0$ dient als Indiz für das Vorliegen eines durch eine transiente mechanische Einwirkungen verursachten impulsartigen Signalanteiles und generiert ein entsprechendes Triggersignal S. Das Triggersignal S wird einem Transientenrekorder 16 zugeführt, in dem die in der Recheneinrichtung 12 ermittelten Daten für ein Zeitfenster aufgezeichnet und an einen Auswerterechner 18 weitergegeben werden, um mit diesem eine nachträgliche Analyse durchführen zu können.

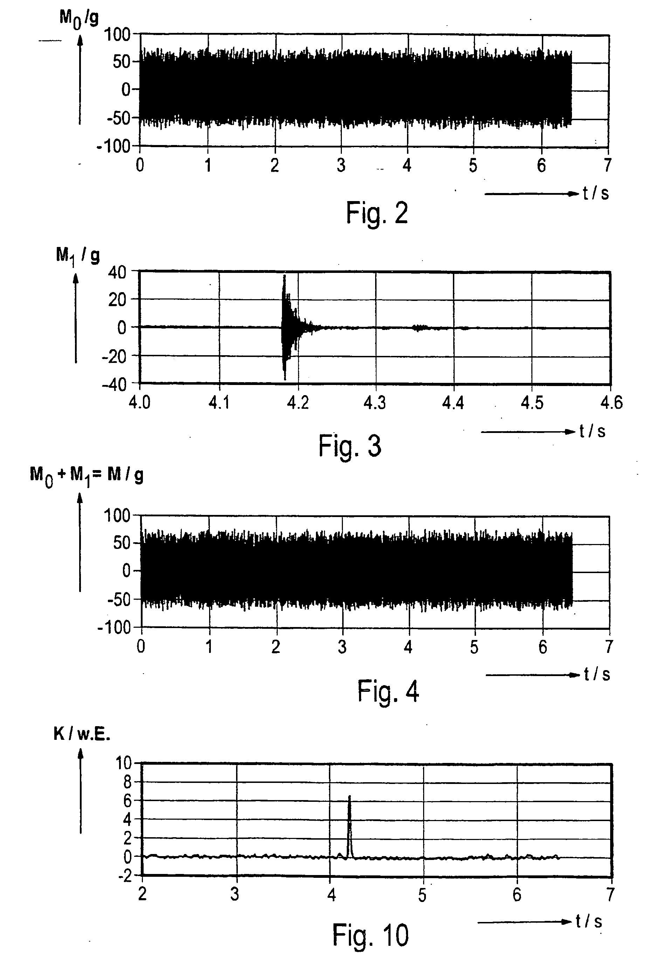

Fig. 2 zeit das von einem Sensor 4 erfasste verstärkte Messsignal (Untergrundsignal $M_0$) für einen Zeitraum von etwa 6,5 s. Der Figur ist zu entnehmen, dass das normale Betriebsgeräusch eine Signalamplitude zwischen 50 und 100 g erreicht.

In Fig. 3 ist in einem Diagramm das durch den Aufprall einer Kachel auf eine Leitschaufel der Gasturbine bei ruhendem Läufer, das heißt bei Abwesenheit des normalerweise vorhandenen Betriebsgeräusches entstehende Messsignal (Nutzsignal $M_1$) gegen die Zeit aufgetragen. Dem Diagramm ist zu entnehmen, dass die Amplitude dieses Nutzsignals $M_1$ deutlich kleiner ist als die Amplitude des Untergrundsignals $M_0$ gemäß Fig. 2.

Fig. 4 zeigt nun das Messsignal M, wenn Untergrundsignal $M_0$ und Nutzsignal $M_1$ überlagert sind. Anhand dieser Fig. ist zu erkennen, dass eine Amplitudenüberwachung des Messsignals M nicht ausreicht, um das Auftreten eines Aufpralls sicher detektieren zu können.

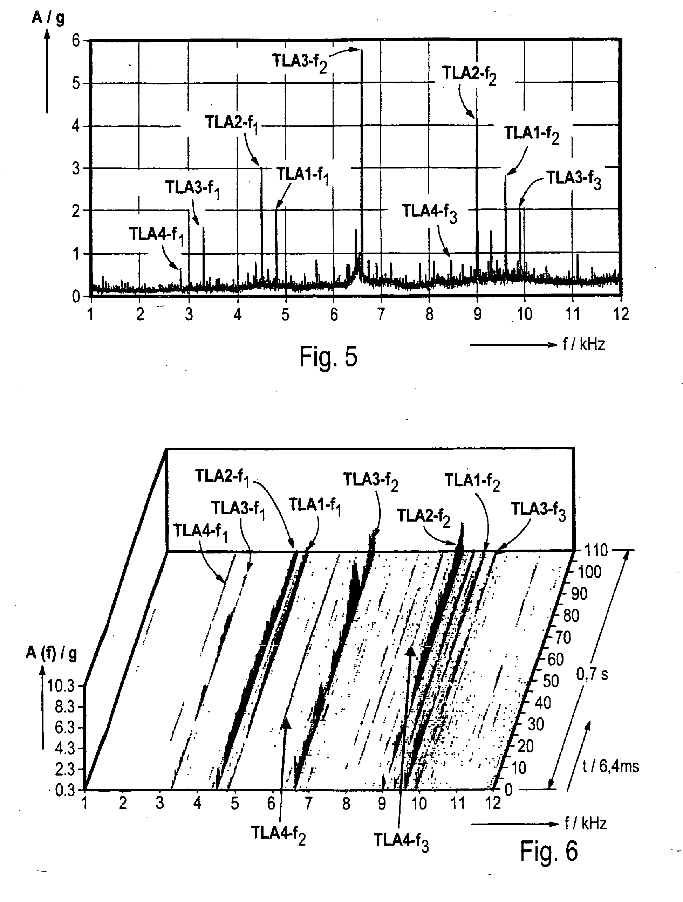

In Fig. 5 ist das typische Frequenzspektrum A(f) der bei einer Gasturbine auftretenden Betriebsgeräusche dargestellt. In der Fig. ist zu erkennen, dass im Frequenzspektrum A(f) neben einem Grundrauschen signifikante Linien (TLA1-$f_1$, ...) auftreten, die den von der Drehzahl abhängigen Grundfrequenzen $f_1$ der Laufschaufeln beziehungsweise mehrfachen Harmonischen $f_{2,3}$ davon entsprechen.

Dem Wasserfalldiagramm gemäß Fig. 6 ist zu entnehmen, dass das Frequenzspektrum A(f) seinerseits Schwankungen unterliegt und zeitlich variabel ist. Mit anderen Worten nicht nur die Amplitude des Betriebsgeräusches der Gasturbine sondern auch dessen speziale Zusammensetzung unterliegen einer zeitlichen Schwankung, die eine Detektion von vom Nutzsignal herrührenden Frequenzanteilen erschweren.

In Fig. 7 ist anhand einer Prinzipskizze der erste Schritt der in der Recheneinheit 12 (Fig. 1) implementierten Vorgehensweise erläutert. Das mit hoher Taktrate digitalisierte Messsignal M (in der Figur aus Gründen der Übersichtlichkeit analog dargestellt) wird für einen Zeitabschnitt $\Delta t$ gespeichert und der auf diese Weise gespeicherte Ausschnitt einer schnellen diskreten Fouriertransformation unterzogen. Nach einem Zeitschritt $\delta t$ wird der Ausschnitt aktualisiert und in einem überlappender Zeitabschnitt $\Delta t$ gleicher Länge erneut eine Fouriertransformation durchgeführt Typischerweise ist $\Delta t = 50ms$ und $\delta t = 6ms$.

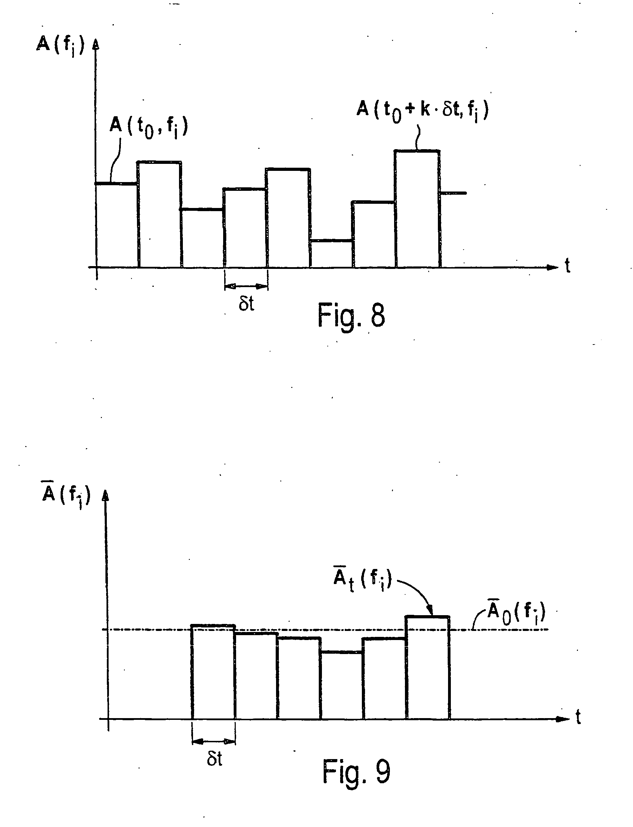

In Fig. 8 ist nun der zeitliche Verlauf des Betrages A bei einer vorgegebenen Frequenz $f_i$ veranschaulicht. Dieser Fig. ist zu entnehmen, das der Betrag $A(f_i)$ bei dieser vorgegebenen Frequenz $f_i$ zeitlich variiert. Das in der Fig. eingetragene Zeitintervall $\delta t$ ist der Zeitschritt in dem die schnelle Fouriertransformation aktualisiert wird. Gemäß der Erfindung wird nun für eine Vielzahl N vorgegebener Frequenzen $f_i$ oder Frequenzbereiche und in zeitlich aufeinander folgenden Zeitschritten $\delta t$ für zeitlich überlappende Zeitabschnitte $\Delta t$ der zugehörige Betragswert $A(t,f_i)$ mit $t = t_0+k\delta t$ bestimmt, wobei k eine natürliche Zahl ist.

Der auf diese Weise gewonnene aktuelle Betragswert $A(t,f_i)$ wird nun gemäß Fig. 9 von einem für diese Frequenz $f_i$ gebildeten Betragsmittelwert $\overline{A}(f_i)$ abgezogen. Bei dem Betragsmittelwert $\overline{A}(f_i)$ kann es sich um einen zeitlich konstanten, fest vorgegebenen Mittelwert handeln, wie dies im Diagramm strichpunktiert eingetragen ist. Besonders vorteilhaft wird als Mittelwert jedoch ein zeitlich gleitender Mittelwert errechnet, der aus einer Mehrzahl n jeweils vorangegangener Beträge errechnet worden ist. Dadurch können langsame Änderungen des Betriebsgeräusches der Gasturbine, beispielsweise einsetzendes Brummen, kompensiert werden.

Der auf diese Weise errechnete Differenzwert

$$D(t,f_i) = \overline{A}(f_i) - A(t,f_i)$$

wird nun durch die Standardabweichung

$$s(f_i) = \sqrt{\frac{\sum_{j=1}^{n} \left(D(t_j, f_i)\right)^2}{(n-1)}}$$

dividiert

$$\overline{D}(t,f_i) = D(t,f_i)/s(f_i)$$

$\overline{D}(t,f_i)$ ist eine normierte Abweichung des Betrages A vom Mittelwert $\overline{A}$.

Zur Ermittlung der Standardabweichung $s(f_i)$ werden die Beträge A n vorangegangener Spektren ausgewertet. Mit anderen Worten: Die Standardabweichung $s(f_i)$ wird ständig mit Hilfe von n vorangegangenen Messungen aktualisiert. Alternativ hierzu kann die Standardabweichung $s(f_i)$ für jede Frequenz $f_i$ einmal in einer "Kalibrierung" bestimmt werden und als frequenzspezifische Konstante gespeichert sein.

In einer vorteilhaften Ausgestaltung wird die normierte Abweichung $\overline{D}(t,f_i)$ zusätzlich in einem die Frequenz $f_i$ umgebenden, aus 2L+1 Frequenzen bestehenden Frequenzbereich $f_{i-L}$, $f_{i-L+1}$, ... $f_{i+L}$ gemittelt und eine mittlere normierte Abweichung $\underline{\overline{D}}(t,f_i)$ durch die Gleichung

$$\underline{\overline{D}}(t,f_i) = \frac{1}{1+2L} \sum_{k=-L}^{k=+L} \overline{D}(t,f_{i+k})$$

bestimmt. Dieser zusätzliche Rechenschritt führt zu einer Reduzierung der Höhe und Schwankungsbreite der normierten Abweichung in den Bereichen, in denen nur Untergrundsignale vorliegen. Die Nutzsignal-Anteile werden durch das Mitteln im Frequenzbereich nicht merklich verändert, da sie immer konzentriert um benachbarte Frequenzlinien auftauchen. Durch diese Maßnahme erfolgt nochmal eine Verbesserung des Signal-Untergrund-Verhältnisses um weitere 10 bis 15 dB.

Die auf diese Weise ermittelte normierte Abweichung $\overline{D}(t,f_i)$ oder $\underline{\overline{D}}(t,f_i)$ wird quadriert und über alle diskreten

Frequenzen $f_i$ summiert:

$$S(t) = \sum_{i=1}^{N} \overline{D}(t, f_i)^2 / N \qquad (a)$$

bzw.

$$S(t) = \sum_{i=1}^{N} \underline{\overline{D}}(t, f_i)^2 / N \qquad (b)$$

Aus dieser Summe S(t) wird nun ein Parameterwert K(t) durch Bildung der Wurzel abgeleitet:

$$K(t) = \sqrt{S(t)}$$

Dieser dient als Bewertungsfunktion für das Auftreten eines Aufschlags. Alternativ hierzu kann als Bewertungsfunktion auch die Differenz zwischen dem Parameterwert K(t) und einem gleitenden zeitlichen Mittelwert $\overline{K}(t)$ dieses Parameterwerts K(t)

$$B(t) = K(t) - \overline{K}(t)$$

gebildet werden und als Kenngröße für das Auftreten eines Aufschlags dienen.

Die auf diese Weise und mit Hilfe der mittleren normierten Abweichung $\underline{\overline{D}}$ (Gleichung (b)) gewonnene Bewertungsfunktion K(t) ist in Figur 10 gegen die Zeit t aufgetragen. Aufgrund der großen Zeitskala ($\delta t \ll 1$ s) ergibt sich in der Darstellung ein kontinuierlicher Verlauf. In der Figur ist nun zu erkennen, dass der Bewertungsfunktion bei t = 4,2 s ein signifikantes Maximum aufweist, so dass das Auftreten eines impulsartigen Ereignisses sicher erkannt werden kann. Ein entsprechender Schwellwert $K_0$ kann knapp über dem Rauschpegel gesetzt werden. Der durch das erfindungsgemäße Verfahren gewonnene Abstand zwischen Nutzsignal und Rauschen beträgt im dargestellten Beispiel 25 - 30 dB.

Bezugszeichenliste

2      Anlagenteil
4      Sensor
6      Vorverstärker
8      Multiplexer
10     Analog/Digital-Wandler
12     Recheneinrichtung
14     Vergleichseinrichtung
16     Transientenrekorder
18     Auswerterechner

M      Messsignal
$M_0$    Untergrundsignal

$M_1$    Nutzsignal
K      Parameterwert

t      Zeit
$\Delta t$     Zeitabschnitt
$\delta t$     Zeitschritt
A      Betrag
$f_i$     Frequenz
$\overline{A}$      Betragsmittelwert

**Patentansprüche**

1.  Verfahren zur Detektion einer impulsartigen mechanischen Einwirkung auf ein Anlagenteil (2), bei dem ein im Anlagenteil (2) vorhandenes Betriebsgeräusch kontinuierlich mit einem am Anlagenteil (2) angeordneten Sensor (4) erfasst und von diesem in ein Messsignal M umgewandelt wird, **gekennzeichnet durch** folgende Verfahrensschritte:

    a) in zeitlich aufeinanderfolgenden Zeitabschnitten ($\Delta t$) wird bei vorgegebenen Frequenzen ($f_i$) der Betrag A des Frequenzspektrums des Messsignals ermittelt,
    b) für jeden Zeitabschnitt ($\Delta t$) und jede der vorgegebenen Frequenzen ($f_i$) wird die Abweichung des Betrages A von einem Betragsmittelwert ($\overline{A}$) bestimmt,
    c) aus den für jede der vorgegebenen Frequenzen ($f_i$) bestimmten Abweichungen wird für jeden Zeitabschnitt eine einzige, für alle Frequenzen ($f_i$) gemeinsame Bewertungsfunktion (K) abgeleitet,
    d) die Bewertungsfunktion (K) wird mit einem Schwellwert ($K_o$) verglichen und das Überschreiten des Schwellwerts ($K_o$) als Indiz für das Vorliegen eines die mechanische Einwirkung anzeigenden impulsartigen Signalanteiles ($M_1$) herangezogen.

2.  Verfahren nach Anspruch 1, bei dem sich die aufeinanderfolgenden Zeitabschnitte ($\Delta t$) überlappen.

3.  Verfahren nach Anspruch 1 oder 2, bei dem der Betragsmittelwert ($\overline{A}$) für jede der vorgegebenen Frequenzen aus den in verschiedenen Zeitabschnitten ($\Delta t$) ermittelten Beträge (A) durch eine zeitlich gleitende Mittelwertbildung ermittelt wird.

4.  Verfahren nach einem der Ansprüche 1 bis 3, bei dem

    e) für jede der vorgegebenen Frequenzen ($f_i$) für eine Mehrzahl von aufeinanderfolgenden Zeitabschnitten ($\Delta t$) die Standardabweichung der Beträge vom Betragsmittelwert ermittelt und mit dieser die normierte Abweichung der Beträge vom Betragsmittelwert bestimmt wird, und
    f) aus dieser für jeden Zeitabschnitt ($\Delta t$) ein aktueller Parameterwert durch Bildung der Summe der Quadratwerte jeder normierten Abweichung über jede der vorgegebenen Frequenzen gebildet wird, aus dem
    g) die Bewertungsfunktion (K) abgeleitet wird.

5.  Verfahren nach Anspruch 4, bei dem über mehrere Zeitabschnitte ein gleitender mittlerer Parameterwert abgeleitet wird und die Bewertungsfunktion aus der Differenz aus dem mittleren Parameterwert und dem aktuellen Parameterwert gebildet ist.

6.  Einrichtung zur Detektion einer impulsartigen mechanischen Einwirkung auf ein Anlagenteil (2), mit zumindest einem am Anlagenteil angeordneten Sensor (4) zum kontinuierlichen Erfassen und Messen eines im Anlagenteil (2) vorhandenen Betriebsgeräusches, sowie einer dem Sensor (4) oder den Sensoren (4) nachgeschalteten A/D-Wandler (10) zum Digitalisieren der vom Sensor erfassten Messsignale und zum Weiterleiten der digitalisierten Messsignale an eine Recheneinrichtung (12), welche zum Durchführen der folgenden Rechenschritte eingerichtet ist:

    a) Ermitteln des Betrags (A) des Frequenzspektrums des Messsignals (M) in zeitlich aufeinanderfolgenden Zeitabschnitten ($\Delta t$) bei vorgegebenen Frequenzen ($f_i$),
    b) Bestimmen der Abweichung der Beträge von einem Betragsmittelwert ($\overline{A}$) für jeden Zeitabschnitt ($\Delta t$) und jede der vorgegebenen Frequenzen ($f_i$),
    c) Ableiten einer einzigen, für alle Frequenzen ($f_i$) gemeinsamen Bewertungsfunktion (K) aus den für jede der

vorgegebenen Frequenzen ($f_i$) bestimmten Abweichungen für jeden Zeitabschnitt ($\Delta t$,
d) Vergleichen der Bewertungsfunktion (K) mit einem Schwellwert ($K_o$) und Weiterleiten eines Alarmsignals (S) bei Überschreiten des Schwellwerts ($K_o$).

**7.** Einrichtung nach Anspruch 6, bei der einander überlappende Zeitabschnitte ($\Delta t$) vorgesehen sind.

**8.** Einrichtung nach Anspruch 6 oder 7, bei der des Betragsmittelwert ($\overline{A}$) für jede der vorgegebenen Frequenzen ($f_i$) durch eine zeitlich gleitende Mittelwertbildung aus den in verschiedenen Zeitabschnitten ($\Delta t$) ermittelten Beträge (A) ermittelt wird.

**9.** Einrichtung nach einem der Ansprüche 6 bis 8, mit einem in der Recheneinrichtung (12) implementierten Algorithmus zum

e) Ermitteln der Standardabweichung der Beträge (A) vom Betragsmittelwert ($\overline{A}$) für jede der vorgegebenen Frequenzen ($f_i$) für eine Mehrzahl von aufeinanderfolgenden Zeitabschnitten ($\Delta t$) und Bestimmen einer normierten Abweichung der Beträge (A) vom Betragsmittelwert ($\overline{A}$) durch Division der Abweichung durch die Standardabweichung,
f) Ableiten eines aktuellen Parameterwertes für jeden Zeitabschnitt durch Bildung der Summe der Quadratwerte jeder normierten Abweichung über jede der vorgegebenen Frequenzen, und zum
g) Erzeugen der Bewertungsfunktion (K) aus dem aktuellen Parameterwert.

**10.** Einrichtung nach Anspruch 9, bei der der in ihr implementierte Algorithmus einen gleitenden mittleren Parameterwert bildet und aus der Differenz zwischen dem mittleren Parameterwert und dem aktuellen Parameterwert die Bewertungsfunktion (K) erzeugt.

**Claims**

**1.** Method for detecting a pulse-type mechanical effect on a system part (2), in the case of which an operating noise present in the system part (2) is detected continuously by a sensor (4) arranged on the system part (2), and is converted by said sensor into a measurement signal M, **characterized by** the following method steps:

a) the magnitude A of the frequency spectrum of the measurement signal is determined in temporally sequential time segments ($\Delta t$) at prescribed frequencies ($f_i$),
b) the deviation of the magnitude A from a mean magnitude ($\overline{A}$) is determined for each time segment ($\Delta t$) and each of the prescribed frequencies ($f_i$),
c) a single evaluation function (K), which is common to all frequencies ($f_i$), is derived for each time segment from the deviations determined for each of the prescribed frequencies ($f_i$),
d) the evaluation function (K) is compared with a threshold value ($K_o$), and the overshooting of the threshold value ($K_o$) is used as an index for the presence of a pulse-type signal component ($M_1$) indicating the mechanical effect.

**2.** Method according to Claim 1, in which the sequential time segments ($\Delta t$) overlap one another.

**3.** Method according to Claim 1 or 2, in which the mean magnitude ($\overline{A}$) is determined for each of the prescribed frequencies from the magnitudes (A) determined in different time segments ($\Delta t$) by forming the sliding time mean.

**4.** Method according to one of Claims 1 to 3, in which

e) for each of the prescribed frequencies ($f_i$) the standard deviation of the magnitudes from the mean magnitude is determined for a plurality of sequential time segments ($\Delta t$) and the normalized deviation of the magnitudes from the mean magnitude is determined with the aid of said standard deviation, and
f) from this a current parameter value is formed for each time segment ($\Delta t$) by forming the sum of the squares of each normalized deviation over each of the prescribed frequencies, from which parameter value
g) the evaluation function (K) is derived.

**5.** Method according to Claim 4, in which a sliding mean parameter value is derived over a number of time segments, and the evaluation function is formed from the difference between the mean parameter value and the current parameter value.

6. Device for detecting a pulse-type mechanical effect on a system part (2), having at least one sensor (4), arranged on the system part, for continuously detecting and measuring an operating noise present in the system part (2), and having an A/D converter (10), connected downstream of the sensor (4) or the sensors (4), for digitizing the measurement signals detected by the sensor and for passing on the digitized measurement signals to a computer (12) which is set up for carrying out the following computational steps:

   a) determining the magnitude (A) of the frequency spectrum of the measurement signal (M) in temporally sequential time segments ($\Delta t$) for prescribed frequencies ($f_i$),
   b) determining the deviation of the magnitudes from a mean magnitude ($\overline{A}$) for each time segment ($\Delta t$) and each of the prescribed frequencies ($f_i$),
   c) deriving a single evaluation function (K), which is common to all frequencies ($f_i$), from the deviations, determined for each of the prescribed frequencies ($f_i$), for each time segment ($\Delta t$),
   d) comparing the evaluation function (K) with a threshold value ($K_o$) and passing on an alarm signal (S) upon overshooting of the threshold value ($K_o$).

7. Device according to Claim 6, in which mutually overlapping time segments ($\Delta t$) are provided.

8. Device according to Claim 6 or 7, in which the mean magnitude ($\overline{A}$) is determined for each of the prescribed frequencies ($f_i$) by forming the sliding time mean from the magnitudes (A) determined in different time segments ($\Delta t$).

9. Device according to one of Claims 6 to 8, having an algorithm, implemented in the computer (12), for

   e) determining the standard deviation of the magnitudes (A) from the mean magnitude ($\overline{A}$) for each of the prescribed frequencies ($f_i$) for a plurality of sequential time segments ($\Delta t$), and determining a normalized deviation of the magnitudes (A) from the mean magnitude ($\overline{A}$) by dividing the deviation by the standard deviation,
   f) deriving a current parameter value for each time segment by forming the sum of the squares of each normalized deviation over each of the prescribed frequencies, and for
   g) generating the evaluation function (K) from the current parameter value.

10. Device according to Claim 9, in which the algorithm implemented in it forms a sliding mean parameter value and generates the evaluation function (K) from the difference between the mean parameter value and the current parameter value.

**Revendications**

1. Procédé de détection d'une action mécanique impulsionnelle sur une pièce d'une installation (2), dans lequel un bruit de fonctionnement présent dans la pièce d'une installation (2) est détecté en continu avec un capteur (4) disposé sur la pièce de l'installation (2) et est converti par celui-ci en un signal de mesure M, **caractérisé par** les étapes de procédé suivantes :

   a) à des intervalles de temps ($\Delta t$) se succédant temporellement, la valeur absolue A du spectre de fréquence du signal de mesure est déterminée à des fréquences prédéfinies ($f_i$),
   b) pour chaque intervalle de temps ($\Delta t$) et chacune des fréquences prédéfinies ($f_i$), l'écart de la valeur absolue A par rapport à une valeur moyenne de la valeur absolue ($\overline{A}$) est déterminé,
   c) d'après les écarts déterminés pour chacune des fréquences prédéfinies ($f_i$), une fonction d'évaluation unique (K), commune à toutes les fréquences ($f_i$) est déduite pour chaque intervalle de temps,
   d) la fonction d'évaluation (K) est comparée avec une valeur seuil ($K_o$) et on utilise le dépassement de la valeur seuil ($K_o$) comme indice de la présence d'une partie d'un signal impulsionnel indiquant l'effet mécanique.

2. Procédé selon la revendication 1, dans lequel les intervalles de temps ($\Delta t$) successifs se superposent.

3. Procédé selon la revendication 1 ou 2, dans lequel la valeur moyenne de la valeur absolue ($\overline{A}$) pour chacune des fréquences prédéfinies est déterminée d'après les valeurs absolues (A) déterminées pendant des intervalles de temps ($\Delta t$) différents par une formation de valeur moyenne avec lissage temporel.

**4.** Procédé selon une des revendications 1 à 3, dans lequel

e) pour chacune des fréquences prédéfinies ($f_i$) pour une pluralité d'intervalles de temps ($\Delta t$) successifs, l'écart type des valeurs absolues par rapport à la valeur moyenne de la valeur absolue est déterminé et avec celui-ci, un écart normalisé des valeurs absolues par rapport à la valeur moyenne de la valeur absolue est déterminé, et

f) d'après la valeur de paramètre de chaque intervalle de temps ($\Delta t$), une valeur de paramètre courante est formée par formation de la somme des valeurs carrées de chaque écart normalisé sur chacune des fréquences prédéfinies, à partir de laquelle

g) la fonction d'évaluation (K) est déduite.

**5.** Procédé selon la revendication 4, dans lequel une valeur de paramètre moyenne lissée est déduite sur plusieurs intervalles de temps et la fonction d'évaluation est formée à partir de la différence de la valeur de paramètre moyenne et de la valeur de paramètre courante.

**6.** Dispositif de détection d'un effet mécanique impulsionnel sur une pièce d'une installation (2), comportant au moins un capteur (4) disposé sur la pièce de l'installation pour détecter et mesurer en continu un bruit de fonctionnement présent dans la pièce de l'installation (2), ainsi qu'un convertisseur A/N (10) branché en aval du capteur (4) ou des capteurs (4) pour numériser les signaux de mesure détectés par le capteur et pour transmettre les signaux de mesure numérisés à un dispositif de calcul (12), qui est conçu pour exécuter les étapes de calcul suivantes :

a) détermination de la valeur absolue (A) du spectre de fréquence du signal de mesure (M) pendant des intervalles de temps ($\Delta t$) se succédant temporellement à des fréquences ($f_i$) prédéfinies,

b) détermination de l'écart des valeurs absolues par rapport à une valeur moyenne de la valeur absolue ($\overline{A}$) pour chaque intervalle de temps ($\Delta t$) et chacune des fréquences prédéfinies ($f_i$),

c) déduction d'une fonction d'évaluation (K) unique, commune à toutes les fréquences ($f_i$) d'après les écarts de chaque intervalle de temps ($\Delta t$), déterminés pour chacune des fréquences prédéfinies ($f_i$),

d) comparaison de la fonction d'évaluation (K) avec une valeur seuil ($K_o$) et transmission d'un signal d'alarme (S) lors du dépassement de la valeur seuil ($K_o$).

**7.** Dispositif selon la revendication 6, dans lequel des intervalles de temps ($\Delta t$) se superposant les uns les autres sont prévus.

**8.** Dispositif selon la revendication 6 ou 7, dans lequel la valeur moyenne de la valeur absolue ($\overline{A}$) pour chacune des fréquences ($f_i$) prédéfinies est déterminée par une formation de valeur moyenne avec lissage temporel d'après les valeurs absolues (A) déterminées pendant différents intervalles de temps ($\Delta t$).

**9.** Dispositif selon une des revendications 6 à 8, comportant un algorithme implémenté dans le dispositif de calcul (12) pour :

a) déterminer l'écart type des valeurs absolues (A) par rapport à la valeur moyenne de la valeur absolue ($\overline{A}$) pour chacune des fréquences prédéfinies ($f_i$) d'une pluralité d'intervalles de temps ($\Delta t$) successifs et détermination d'un écart normalisé des valeurs absolues (A) par rapport à la valeur moyenne de la valeur absolue ($\overline{A}$) par division de l'écart par l'écart type,

f) déduction d'une valeur de paramètre courante pour chaque intervalle de temps par formation de la somme des valeurs carrées de chaque écart normalisé sur chacune des fréquences prédéfinies, et de

g) génération de la fonction d'évaluation (K) à partir de la valeur de paramètre courante.

**10.** Dispositif selon la revendication 9, dans lequel l'algorithme qui y est implémenté forme une valeur de paramètre moyenne lissante et génère la fonction d'évaluation (K) d'après la différence entre la valeur de paramètre moyenne et la valeur de paramètre courante.

Fig. 1

Fig. 7

$M_0/g$

Fig. 2

$M_1/g$

Fig. 3

$M_0 + M_1 = M/g$

Fig. 4

$K/w.E.$

Fig. 10

Fig. 5

Fig. 6

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0765466 B1
- DE 19857552 A1
- DE 19843615 C2
- DE 19727114 C2
- DE 19545008 C2
- US 4888948 A
- WO 0175272 A2
- WO 0055585 A2